# EUROPÄISCHE PATENTANMELDUNG

(11) **EP 0 855 328 A2**
(43) Veröffentlichungstag der Anmeldung: **29.07.1998**
(21) Anmeldenummer: 98250022.5
(22) Anmeldetag: 22.01.1998
(51) Int. Cl.: B61G 5/08, B60T 17/04

(54) **Vorrichtung zur Betätigung von Absperrorganen, insbesondere bei Eisenbahnwaggons**

(30) Priorität: 28.01.1997 DE 19704966
(71) Anmelder: MANNESMANN Aktiengesellschaft, 40213 Düsseldorf (DE)
(72) Erfinder: Niederstadt, Jörg, Dr.-Ing., 30966 Hemmingen/Devese (DE); Schmidt, Dietmar, Dipl.-Ing., 30952 Ronnenberg (DE)
(74) Vertreter: Presting, Hans-Joachim, Dipl.-Ing.

(57) **Zusammenfassung**

Die Erfindung betrifft eine Vorrichtung zur Betätigung von Absperrorganen einer Luftleitung, die entlang eines aus einzelnen Wagen, insbesondere Eisenbahnwaggons, gebildeten Zugverbandes zur Druckmittelversorgung verläuft und zwischen den Wagen koppelbar ist, wobei je ein Absperrorgan im Bereich der Kopplungsstellen jedes Wagens angeordnet ist.

Es wird vorgeschlagen, daß das Absperrorgan (2) durch einen Federspeicherzylinder (3) betätigbar ist, dem zur Rückstellung ein Druckmittel über ein Ventil (6) und eine Betätigungsdruckleitung (7) zuleitbar ist.

## Beschreibung

Die Erfindung betrifft eine Vorrichtung zur Betätigung von Absperrorganen gemäß dem Oberbegriff des Anspruchs 1.

Insbesondere bei Eisenbahnwaggons verläuft neben einer Hauptluftleitung zur Versorgung der Bremseinrichtung eine Hauptluftbehälterleitung zur Versorgung anderer Drucklufteinrichtungen von Waggon zu Waggon durch den gesamten Zugverband. An den Kopplungsstellen der einzelnen Waggons sind an diesen Luftleitungen Absperrorgane vorgesehen. Diese sind meist in Form eines Hahns mit einem Betätigungshebel zum manuellen Absperren ausgestaltet. Erst das Absperren der Hauptluftleitung bzw. Hauptluftbehälterleitung an einer Kopplungsstelle ermöglicht das Abkoppeln der Luftleitungen eines Waggons vom übrigen Zugverband. Weiterhin haben die Absperrorgane den Zweck, die beiden Luftleitungen des Zugverbandes an ihrem Ende zu verschließen.

In der Praxis zeigte sich, daß eine manuelle Betätigung der Absperrorgane wegen deren Schwergängigkeit mühsam ist und dazu entlang des Zugverbands weite Laufwege zurückgelegt werden müssen.

Der Erfindung liegt deshalb die Aufgabe zugrunde, eine einfache und zugleich wirkungsvolle Lösung zur automatischen Betätigung von Absperrorganen der Luftleitungen von Zugverbänden zu schaffen.

Die Aufgabe wird, ausgehend von einer Vorrichtung gemäß dem Oberbegriff des Anspruchs 1, durch dessen kennzeichnende Merkmale gelöst.

Die Erfindung schließt die technische Lehre ein, daß ein Absperrorgan über einen druckmittelbetriebenen Federspeicherzylinder betätigbar ist, dem zur Rückstellung Druckmittel über ein Ventil und eine Betätigungsdruckmittelleitung zuleitbar ist. Die Betätigung des Ventils kann beispielsweise elektrisch oder mechanisch erfolgen und ermöglicht insoweit die Bedienung des Absperrorgans mit einer sehr geringen manuellen Betätigungsenergie. Die erfindungsgemäße Lösung hat den Vorteil, daß sie mit der ohnehin im Zugverband zur Verfügung stehenden pneumatischen Energie, die über die Luftleitungen geführt wird, auskommt. Bei der vorliegenden Erfindung wird als Federspeicherzylinder eine Kolben-Zylinder-Einheit verstanden, bei der der Kolben von einer Seite mittels der Druckkraft einer Feder und von der anderen Seite mittels der Kraft, die durch ein zuführbares Druckmittel erzeugt wird, betrieben wird, wobei die Energie der Feder über eine elektromechanische Arretierung speicherbar ist.

Vorzugsweise ist zur Speicherung des Druckmittels ein Druckbehälter vorgesehen, so daß selbst bei geringen Leckagen im Luftleitungssystem noch eine gewisse Zeit lang die Betätigung des Absperrorgangs ermöglicht werden kann. Der Druckbehälter kann vorteilhafter Weise über eine Druckmittelleitung, die von einer Luftleitung - vorzugsweise der Hauptluftbehälterleitung - abzweigt, gespeist werden. In diese abzweigende Druckmittelleitung ist vorzugsweise ein Rückschlagventil vorzusehen, dessen Sperrung in Richtung der Luftleitung wirkt. Damit ist es selbst bei einem drucklosen Zustand der Luftleitung - wie beispielsweise beim Bruch einer Luftleitung - möglich, daß Absperrorgan zu bedienen, um trotzdem automatisch eine An- und Abkopplung von Waggons vornehmen zu können. Hilfsweise ist der Hebel des Absperrorgans auch weiterhin manuell betätigbar. Da die automatische Betätigungsvorrichtung an beiden Kopplungsstellen eines Waggons vorzusehen ist, ist es in diesem Falle möglich, einen beiden Betätigungsvorrichtungen gemeinsamen Druckbehälter vorzusehen.

In einer weiteren vorteilhaften Ausführungsform der Erfindung wird vorgeschlagen, im Betätigungskraftfluß zwischen Federspeicherzylinder und Absperrorgan eine beidseitig beaufschlagbare Kolben-Zylinder-Einheit anzuordnen, die zur Beaufschlagung in Rückstellrichtung über eine Betätigungsdruckleitung mit dem Ventil verbunden ist. Zur Beaufschlagung entgegen der Rückstellrichtung ist sie mit einem weiteren Ventil über eine weitere Druckmittelleitung verbunden. Die Kolbenstange der Kolben-Zylinder-Einheit steht mit der Kolbenstange des Federspeicherzylinders nur in Kontakt. Beide Kolbenstangen sind somit nicht fest miteinander verbunden. Damit ist es möglich, daß die Betätigung des Absperrorgans unabhängig von der Betätigung des Federspeicherzylinders erfolgen kann, was einen Betrieb der Vorrichtung selbst dann gestattet, wenn beispielsweise die Feder im Federspeicherzylinder gebrochen ist oder die Arretierung klemmt.

Vorteilhafter Weise kann die kopplungsstellenseitige Entlüftungsöffnung des Absperrorgans über eine Druckmittelleitung und einem Ventil mit der Betätigungsdruckleitung im Inneren des Waggons verbunden werden. Diese Maßnahme gestattet es, bei geschlossenem Absperrorgan über die Kopplung der Druckmittelleitung von außen her Druckmittel in die Betätigungsdruckleitung zu speisen, wenn beispielsweise nach langer Standzeit eines Waggons kein Druck mehr in der Betätigungsdruckleitung des Waggons zur Verfügung steht. Diese wageninterne Druckmittelleitung kann dabei auch die Funktion eines Druckbehälters übernehmen, so daß ggfs. gänzlich auf diesen verzichtet werden kann.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigt:
- Fig. 1: eine Schaltungsanordnung für die automatische Absperrorganbetätigung unter Verwendung eines Federspeicherzylinders bei einem Waggon,
- Fig. 2: eine Schaltungsanordnung für die automatische Absperrorganbetätigung unter Verwendung einer zusätzlichen Kolben-Zylinder-Einheit.

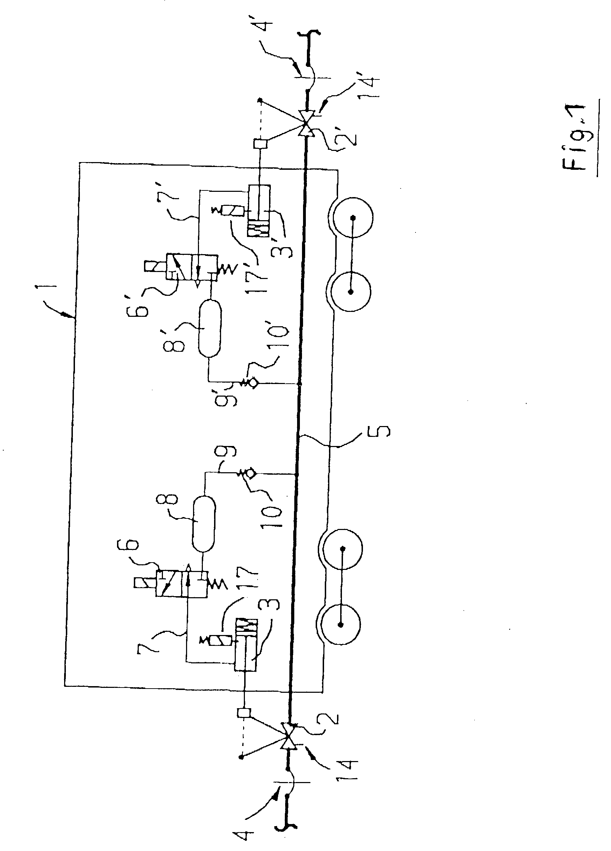

Wie aus Figur 1 hervorgeht, ist bei Verwendung der erfindungsgemäßen Vorrichtung in einem Waggon 1, diese im Bereich beider Kopplungsstellen 4 und 4' vorzusehen. Die nachfolgende Detailbeschreibung beschränkt sich auf Erläuterungen zu einer der beiden identischen Schaltungsanordnungen in einem Waggon, die analog auch für die andere Schaltungsanordnung gilt. Das vorzugsweise als Kugelhahn ausgestaltete Absperrorgan 2 ist in eine Luftleitung 5 eingeschaltet. Die Luftleitung 5 steht hier stellvertretend für die Hauptluftleitung sowie für die Hauptluftbehälterleitung des Zugverbandes. Bezogen auf einen Waggon ist die Luftleitung 5 an beiden Enden mit Kopplungsmitteln versehen. Diese Kopplungsmittel können nur im druckfreien Zustand gelöst werden. Dazu besitzt das Absperrorgan 2 eine kopplungsstellenseitige Entlüftungsöffnung 14, die bei geschlossenem Absperrorgan 2 den kopplungsstellenseitigen Abschnitt der Luftleitung 5 mit der Atmosphäre verbindet. Um einen Waggon oder Zugabschnitt vom übrigen Zugverband zu trennen, ist es insoweit erforderlich, beide im Bereich der Kopplungsstelle liegenden Absperrorgane der betreffenden Waggons zu schließen.

Die Betätigung des Absperrorgans 2 erfolgt über einen Hebel. Der Hebel wird durch die Kolbenstange eines Federspeicherzylinders 3 bedient. In der in Figur 1 dargestellten Hebelposition befindet sich das Absperrorgan 2 im geöffneten Zustand. Zum Schließen ist die Arretierung 17 zu betätigen. Die Arretierung 17 stellt einen elektromagnetisch stellbaren Arretierungsstift dar, der die Feder des Federspeicherzylinders 3 in ihrem gespannten Zustand fixiert. Die Arretierung 17 kann mittels eines Niederspannungs-Stromkreises über einen elektrischen Schalter ausgelöst werden.

Zum Öffnen des Absperrorgans 2 und gleichzeitigem Spannen der Feder des Federspeicherzylinders 3 wird dieser auf der der Feder gegenüberliegenden Kolbenseite über die Druckmittelleitung 7 beaufschlagt. Die Druckmittelbeaufschlagung wird über ein Ventil 6 gesteuert, an dem die Druckmittelleitung 7 angeschlossen ist. Das Ventil 6 ist auch elektromagnetisch betätigbar, so daß dieses ebenfalls über einen elektrischen Schalter bedienbar ist. Das Ventil 6 ist vorzugsweise als 3/2-Wege-Ventil ausgeführt, so daß pro Waggon zwei derartige Ventile vorzusehen sind.

In einer ersten Schaltposition sperrt das Ventil 6 die Verbindung zwischen der Druckmittelleitung 7 und dem Druckbehälter 8, wobei der Druckbehälter 8 ausgangsseitig verschlossen wird und die Druckkammer des Federspeicherzylinders 3 lüftbar ist. Dafür geht die Druckmittelleitung 7 über das Ventil 6 an die Atmosphäre.

In einer zweiten Schaltposition stellt das Ventil 6 die Verbindung zwischen dem Druckbehälter 8 zur Druckmittelleitung 7 her. Damit wird der Federspeicherzylinder 3 mit Druckmittel beaufschlagt, so daß das Absperrorgan 2 in seinen geöffneten Zustand gebracht wird. Der Druckbehälter 8 wird eingangsseitig über die Druckmittelleitung 9 gespeist. Diese ist von der Luftleitung 5 abgezweigt. Zur Verhinderung des Druckabbaus im Druckbehälter 8 bei einem drucklosen Zustand der Luftleitung 5 ist in der Druckleitung 9 ein Rückschlagventil 10 vorgesehen. Durch diese Anordnung wird die Speicherfunktion des Druckbehälters 8 erzielt.

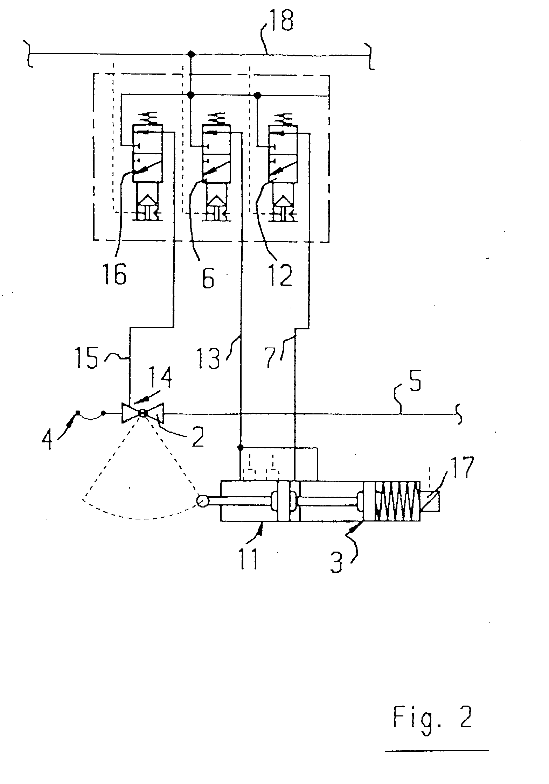

Figur 2 gibt als eine weitere vorteilhafte Ausgestaltungsvariante der Erfindung eine Schaltungsanordnung wieder, die zusätzlich zu der vorhergehend beschriebenen Ausführungsvariante eine Kolben-Zylinder-Einheit 11 im Betätigungskraftfluß für den Hebel des Absperrorganges 2 aufweist, sowie eine Anordnung aufweist, die es gestattet, die Entlüftungsöffnung 14 am Absperrorgan 2 über ein Ventil 16 mit einer wageninternen Druckmittelleitung 18 zu verbinden.

Diese letztgenannte Maßnahme gestattet es, Druckmittel in das Wageninnere leiten zu können, wenn dort kein Druck mehr zur Betätigung des Federspeicherzylinders 3 sowie der Kolben-Zylinder-Einheit 11 - beispielsweise infolge längeren Stehens des Waggons - zur Verfügung steht. Dafür ist das Absperrorgan 2 zunächst gegebenenfalls über die Federspeicherladung im Federspeicherzylinder 3 zu schließen. Nun kann über die Kopplungsstelle 4 der Luftleitung 5 bei geöffnetem elektromagnetischem Ventil 16 Druckmittel zur wageninternen Druckmittelleitung 18 gelangen, die mit einem Druckbehälter verbunden sein kann. Damit kann wieder Druckmittel zur Betätigung des Absperrorgans 2 sowie auch andere Hilfsaggrregate zur Verfügung gestellt werden.

Mit der zusätzlichen Kolben-Zylinder-Einheit 11 ist es möglich, mittels beidseitiger Druckmittelbeaufschlagung ihres Kolbens die Betätigung des Absperrorganes 2 auch beispielsweise bei gebrochener Feder des Federspeicherzylinders 3 und somit getrennt von diesem vornehmen zu können. Insoweit ist die Betätigung des Absperrorgangs 2 unabhängig von der Betätigung des Federspeicherzylinders 3.

Es wird durch eine Abzweigung in der Druckmittelleitung 13 zum Öffnen des Absperrorganges 2 Druckmittel sowohl in den Kolbenraum des Federspeicherzylinders 3 als auch in dem Kolbenraum der Kolben-Zylinder-Einheit 11, welcher in dieselbe Richtung wie der Kolbenraum des Federspeicherzylinders 3 wirkt, geleitet. Zu diesem Zweck ist das elektromagnetische Ventil 6 geöffnet, so daß Druckmittel von der wageninternen Druckmittelleitung 18 in beide Kolbenräume gelangt.

Zum Schließen des Absperrorgans 2 kann entweder die Arretierung 17 der Feder des Federspeicherzylinders 3 geöffnet werden oder es kann über das Ventil 12 und die Druckmittelleitung 7 von der wageninternen Druckmittelleitung 18 her Druckmittel in denjenigen Kolbenraum der Kolben-Zylinder-Einheit 11 geleitet werden, welcher in dieselbe Richtung wie die Feder des Federspeicherzylinders 3 wirkt. Insoweit wird eine Betätigungsmöglichkeit des Absperrorgangs 2 realisiert, die allein über Druckmittelbeaufschlagung umgesetzt werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichenliste

- 1: Waggon
- 2: Absperrorgan
- 3: Federspeicherzylinder
- 4: Kopplungsstelle
- 5: Luftleitung
- 6: Ventil
- 7: Betätigungsdruckleitung
- 8: Druckbehälter
- 9: Druckmittelleitung
- 10: Rückschlagventil
- 11: Kolben-Zylinder-Einheit
- 12: Ventil
- 13: Druckmittelleitung
- 14: Entlüftungsöffnung
- 15: Druckmittelleitung
- 16: Ventil
- 17: Arretierung
- 18: Druckmittelleitung

## Patentansprüche

1. Vorrichtung zur Betätigung von Absperrorganen einer Luftleitung, die entlang eines aus einzelnen Wagen, insbesondere Eisenbahnwaggons, gebildeten Zugverbandes zur Druckmittelversorgung verläuft und zwischen den Wagen koppelbar ist, wobei je ein Absperrorgan im Bereich der Kopplungsstellen jedes Wagens angeordnet ist,
dadurch gekennzeichnet,
daß das Absperrorgan (2) durch einen Federspeicherzylinder (3) betätigbar ist, dem zur Rückstellung ein Druckmittel über ein Ventil (6) und eine Betätigungsdruckleitung (7) zuleitbar ist.

2. Vorrichtung nach Anspruch 1,
dadurch gekennzeichnet,
daß zur Betätigung des Federspeicherzylinders (3) in einem Druckbehälter (8) ein Druckmittel gespeichert ist, wobei der Druckbehälter (8) von der Luftleitung (5) über eine davon abzweigende Druckmittelleitung (9) gespeist ist und mit dem Ventil (6) verbunden ist.

3. Vorrichtung nach Anspruch 2,
dadurch gekennzeichnet,
daß in die von der Luftleitung (5) abzweigende Druckmittelleitung (9) ein Rückschlagventil (10) angeordnet ist, dessen Sperrfunktion in Richtung Luftleitung (5) liegt.

4. Vorrichtung nach einem der vorhergehenden Ansprüche,
dadurch gekennzeichnet,
daß im Betätigungskraftfluß zwischen Federspeicherzylinder (3) und Absperrorgan (2) eine beidseitig beaufschlagbare Kolben-Zylinder-Einheit (11) angeordnet ist, die zur Beaufschlagung in Rückstellrichtung über eine Betätigungsdruckleitung (13) mit dem Ventil (6) verbunden ist und zur Beaufschlagung entgegen der Rückstellrichtung mit einem Ventil (12) über eine Druckmittelleitung (7) verbunden ist.

5. Vorrichtung nach einem der vorhergehenden Ansprüche,
dadurch gekennzeichnet,
daß eine kopplungsstellenseitige Entlüftungsöffnung des Absperrorgans (2) über eine Druckmittelleitung (15) und einem Ventil (16) mit einer wageninternen Druckmittelleitung (18) verbunden ist.

6. Vorrichtung nach einem der vorhergehenden Ansprüche,
dadurch gekennzeichnet,
daß das Absperrorgan (2) als Kugelhahn ausgebildet ist.

7. Vorrichtung nach einem der vorhergehenden Ansprüche,
dadurch gekennzeichnet,
daß als Ventile (6, 6') pro Waggon zwei elektropneumatische 3/2-Wegeventile vorgesehen sind.

8. Vorrichtung nach einem der vorhergehenden Ansprüche,
dadurch gekennzeichnet,
daß der Federspeicherzylinder (3) und die Kolben-Zylinder-Einheit (11) als einzelne Bauteile ausgeführt sind und separat betreibbar sind.
